**Europäisches Patentamt**

**European Patent Office**

**Office européen des brevets**

(19)

(11) Veröffentlichungsnummer : **0 346 673 B1**

(12) # EUROPÄISCHE PATENTSCHRIFT

(45) Veröffentlichungstag der Patentschrift :
**27.01.93 Patentblatt 93/04**

(51) Int. Cl.$^5$ : **C09J 195/00,** C08J 5/12,
C09J 11/04

(21) Anmeldenummer : **89109630.7**

(22) Anmeldetag : **29.05.89**

(54) Zweikomponenten-Reaktionskleber und Verfahren zur Verklebung bituminöser Dichtungsbahnen.

(30) Priorität : **16.06.88 DE 3820599**

(43) Veröffentlichungstag der Anmeldung :
**20.12.89 Patentblatt 89/51**

(45) Bekanntmachung des Hinweises auf die
Patenterteilung :
**27.01.93 Patentblatt 93/04**

(84) Benannte Vertragsstaaten :
**AT BE CH DE FR GB LI LU NL SE**

(56) Entgegenhaltungen :
**GB-A- 434 222**
**US-A- 2 335 104**
**US-A- 4 151 002**
**PATENT ABSTRACTS OF JAPAN, Band 7, Nr.**
**53 (C-154)[1198], 3. März 1983; & JP-A-57 200**
**468 (HITACHI DENSEN) 08-12-1982**

(73) Patentinhaber : **Georg Börner Chemisches**
**Werk für Dach- und Bautenschutz GmbH & Co.**
**KG**
**Seilerweg 10 Postfach 10**
**W-6430 Bad Hersfeld (DE)**

(72) Erfinder : **Fassbender, Gerhard, Dr. rer. nat.**
**Am Obersberg 42**
**W-6430 Bad Hersfeld (DE)**
Erfinder : **Dietrich, Hans-Joachim**
**Stettiner Strasse 11**
**W-6440 Bebra (DE)**

(74) Vertreter : **Kraus, Walter, Dr. et al**
**Patentanwälte Kraus, Weisert & Partner**
**Thomas-Wimmer-Ring 15**
**W-8000 München 22 (DE)**

EP 0 346 673 B1

## Beschreibung

Die Erfindung betrifft einen Zweikomponenten-Reaktionskleber zum Verkleben von Bitumenbahnen unter Herstellung einer wasserundurchlässigen Fläche aus Bitumenbahnen und ein Verfahren zur Verklebung von Bitumenbahnen.

Bitumenbahnen werden für die Dachdeckung und für Abdichtungszwecke in großem Ausmaß verwendet. Bei der Dachdeckung, wie beispielsweise beim Flachdachbau, als auch bei der Abdichtung, wie bei der Isolierung von Bauwerken, die im Grundwasser stehen, zum Beispiel im U-Bahnbau und im Tunnelbau, ist es erforderlich, daß die Bahnen miteinander und mit der Unterlage fest und wasserdicht verklebt werden.

Die Verlegung von Bitumenbahnen kann durch Verkleben mit Heißbitumen im Gieß- und Einrollverfahren oder im Bürstenstreichverfahren, Verschweißen oder Kaltverkleben erfolgen.

Es ist bekannt, für das Verkleben von Dachdeckungs- und Abdichtungsbahnen Heißbitumen oder lösungsmittelhaltige Bitumenkleber zu verwenden. Bei diesen Klebeverfahren werden mehrere Stunden benötigt, bis die Endfestigkeit der Klebung erreicht ist. Die Verwendung lösungsmittelhaltiger Klebstoffe bringt die große Schwierigkeit mit sich, daß die Lösungsmittel entfernt werden müssen. Die Trocknungszeit von lösungsmittelhaltigen Klebstoffen hängt auch von der Luftfeuchtigkeit ab. So müssen in der Praxis oftmals zusätzliche Befestigungen durch mechanische Mittel, wie Nägel oder Schrauben, angebracht werden, um zu verhindern, daß sich die Dachdeckungs- und Abdichtungsbahnen abheben, beispielsweise durch Wind. Ein weiterer Nachteil der lösungsmittelhaltigen Bitumenkleber ist der Volumenschwund der Klebefuge beim Trocknen. Damit zuverlässige Verklebungen erhalten werden, müssen deshalb insbesondere bei stark unebenen Materialien dicke Klebstoffschichten verwendet werden, was zu einem relativ hohen Materialverbrauch führt und was nachteilig ist.

Bis jetzt steht noch kein Klebstoff zur Verfügung, mit dem Bitumenbahnen auf einfache Weise verklebt werden können. Aus diesem Grund werden Dachdeckungs- und Abdichtungsbahnen nach wie vor mit einer heißen Flamme verschweißt.

Die Verlegung von Bitumenbahnen auf hitzeempfindliche Wärmedämmstoffe kann weder durch Verschweißen noch unter Verwendung von heißem Bitumen als Kleber erfolgen, da dadurch die hitzeempfindlichen Wärmdämmstoffe beschädigt würden. Für die Verlegung hitzeempfindlicher Wärmedämmstoffe muß man daher lösungsmittelhaltige Kleber verwenden, deren Verwendung, wie oben angegeben, nachteilig ist.

Der Stand der Verlegetechnik bituminöser Dachbahnen ist zum Beispiel beschrieben in: Richtlinien für die Planung und Ausführung von Dächern mit Abdichtungen - Flachdachrichtlinien - Herausg.: Zentralverband des deutschen Dachdeckerhandwerks, Helmut Gros Verlag Berlin 1982; und abc der Bitumenbahn - Technische Regeln - Herausg.: Industrieverband Bitumen-Dach- und Dichtungsbahnen e.V., Frankfurt.

In der DE-OS 33 17 193 wird die Verwendung von Polyurethanzubereitungen, die bei Feuchtigkeitszutritt unter Volumenausdehnung härten, als Klebstoffe zum Fixieren von Wärmedämmaterialien an Gebäudeflächen beschrieben. Der beschriebene Polyurethanklebstoff besitzt den großen Vorteil, daß er unter Feuchtigkeitszutritt härtet und nur eine geringe Menge an Verdünnungsmittel enthält. Gemäß Seite 11, zweiter Absatz, dieser Druckschrift können die verschiedensten Substrate miteinander verklebt werden. Man kann Dämmstoffe auf Basis organischer Polymerer, wie zum Beispiel Polystyrolschäume oder Polyurethanschäume, mit den am Bau auftretenden Materialien verkleben.

Verwendet man diesen bekannten Klebstoff zur Verklebung der im Handel erhältlichen Bitumenbahnen, die für die Dachdeckung und Abdichtung verwendet werden, so erhält man keine ausreichende Haftung, Verklebung und Wasserfestigkeit.

In der DE-OS 36 37 342 wird ein Verfahren zum Verkleben von Bitumenbahnen beschrieben, bei dem eine Bitumenbahn verwendet wird, auf die ein Vliesstoff aufkaschiert ist und bei dem als Klebstoff eine Polyurethanzubereitung verwendet wird. Dieses bekannte Verfahren besitzt den Nachteil, daß auf die Bitumenbahn noch ein Vliesstoff aufkaschiert werden muß. Die Vliesstoffe besitzen den Nachteil, daß sie Wasser ziehen.

Der vorliegenden Erfindung liegt die Aufgabe zugrunde, einen Reaktionskleber zur Verfügung zu stellen, der eine vollflächige, dauerhaft verträgliche und preisgünstige Verklebung bituminöser Dichtungsbahnen ermöglicht. Es sollen die bekannten, im Handel erhältlichen Bitumenbahnen unter Herstellung einer wasserundurchlässigen Fläche aus Bitumenbahnen auf einfache Weise verklebt werden können. Der Kleber soll kalt zu verarbeiten sein, so daß keine Brandgefahr durch die offenen Flammen auf dem Dach besteht. Er soll lösungsmittelfrei, das heißt umweltfreundlich, sein. Durch das Nichtvorhandensein von Lösungsmitteln soll die Blasenbildung vermieden werden. Weiterhin soll keine neue Verarbeitungstechnik erforderlich sein. Es soll die Verarbeitung nach dem Anrühren, wie im Gieß- und Einrollverfahren bzw. Bürstenstreichverfahren, möglich sein. Der Kleber soll auf einfache Weise und preisgünstig herzustellen sein, und die Verarbeiter sollen keine neuen Investitionen tätigen müssen. Der Kleber soll geeignet sein, hitzeempfindliche Wärmedämmstoffe kalt mit Bitumenbahnen verkleben zu können. Er soll weiterhin zum Verkleben von Bitumenbahnen mit bauüblichen Untergründen, zum Beispiel Beton, Stahltrapezblech und Faserzementplatten geeignet sein. Für die mit dem Kleber umgebenen Arbeiter sollen keine gesundheitlichen Schädigungen zu befürchten sein.

Die Erfindung betrifft einen Zweikomponenten-Reaktionskleber aus einer Komponente A und einer Komponente B, wobei die beiden Komponenten kurz vor Gebrauch vermischt werden, der dadurch gekennzeichnet ist, daß

(a) die Komponente A mindestens eine bei Raumtemperatur flüssige Fettsäure, und mindestens ein Erdalkalioxid oder Aluminiumoxid oder ein Gemisch dieser Verbindungen oder Wasser und/oder Kautschuklatex enthält,

(b) die Komponente B mindestens ein Erdalkalioxid oder Aluminiumoxid oder ein Gemisch dieser Verbindungen oder Wasser und/oder Kautschuklatex enthält,

wobei entweder in der Komponente A oder in der Komponente B mindestens ein Erdalkalioxid oder Aluminiumoxid oder ein Gemisch dieser Verbindungen, und in der anderen Komponente Wasser und/oder Kautschuklatex enthalten sein muß und

(c) die Komponente A oder die Komponente B oder beide Komponenten mit Bitumen, Hartwachs oder einem bitumenverträglichen Polymeren oder einem Gemisch dieser Verbindungen verschnitten sind, wobei der Gehalt an Bitumen, Hartwachs oder bitumen verträglichen Polymeren oder Gemische dieser Verbindungen in Komponente A bis zu 60 Gew.-% und in Komponente B bis zu 90 Gew.-% beträgt.

Die Erfindung betrifft ebenfalls einen Zweikomponenten-Reaktionskleber aus einer Komponente A und einer Komponente B, wobei die beiden Komponenten kurz vor Gebrauch vermischt werden, der dadurch gekennzeichnet ist, daß

(a) die Komponente A mindestens eine bei Raumtemperatur flüssige Fettsäure enthält, und

(b) die Komponente B mindestens ein Alkalihydroxid, Erdalkalihydroxid oder Aluminiumhydroxid und gegebenenfalls Wasser und/oder Kautschuklatex enthält, und

(c) die Komponente A oder die Komponente B oder beide Komponenten mit Bitumen, Hartwachs oder einem bitumenverträglichen Polymeren, oder einem Gemisch dieser Verbindungen verschnitten sind, wobei der Gehalt an Bitumen, Hartwachs oder bitumenverträglichen Polymeren oder Gemischen dieser Verbindungen in Komponente A bis zu 60 Gew.-% und in Komponente B bis zu 90 Gew.-% beträgt.

Die Anmelderin hat überraschenderweise gefunden, daß ein Kleber der oben genannten Zusammensetzung überraschende Eigenschaften aufweist und zum kalten Verkleben von Bitumenbahnen geeignet ist. Der erfindungsgemäße Kleber erlaubt eine vollflächige dauerhafte verträgliche und preisgünstige Verklebung. Dadurch, daß der Kleber kalt verarbeitet werden kann, besteht keine Brandgefahr auf dem Dach, und da er lösungsmittelfrei ist, ist er umweltfreundlich und eine Blasenbildung wird vermieden. Der Kleber kann für die Verarbeitung von Bitumenbahnen nach dem Anrühren wie im Gieß- und Einrollverfahren bzw. im Bürstenstreichverfahren verwendet werden. Mit dem Kleber können hitzeempfindliche Wärmedämmstoffe kalt mit Bitumenbahnen verklebt werden. Außerdem können Bitumenbahnen mit bauüblichen Untergründen verklebt werden. Bei der ersten Ausführungsform des erfindungsgemäßen Klebers ist es wesentlich, daß entweder die Komponente A oder die Komponente B mindestens ein Erdalkalioxid oder Aluminiumoxid oder ein Gemisch dieser Verbindungen enthält. Die andere Komponente muß Wasser oder Wasser in Form eines Kautschuklatex enthalten. Wenn eine Fettsäure, ein Erdalkalioxid oder Aluminiumoxid und Wasser in Anwesenheit von Bitumen, Hartwachs oder einem Bitumen verträglichen Polymeren zusammen vermischt werden, findet überraschenderweise eine Härtung statt. Gemäß der zweiten Ausführungsform des Reaktionsklebers enthält die Komponente A eine flüssige Fettsäure und die Komponente B mindestens ein Alkalihydroxid, Erdalkalihydroxid oder Aluminiumhydroxid und gegebenenfalls Wasser oder Kautschuklatex. Es wurde überraschenderweise gefunden, daß auch dann eine Härtung eintritt. In diesem Fall übernehmen das Alkalihydroxid, Erdalkalihydroxid oder Aluminiumhydroxid praktisch gemeinsam die Funktion des Erdalkalioxids oder Aluminiumoxids und des Wassers. Bei der zweiten Ausführungsform kann die Komponente A außer der Fettsäure noch zusätzlich ein Erdalkalioxid oder Aluminiumoxid enthalten. Überraschenderweise findet eine Härtung statt, wenn die Komponente B ein Alkalihydroxid, Erdalkalihydroxid oder Aluminiumhydroxid enthält. Es ist nicht unbedingt erforderlich, daß in der Komponente B Wasser und/oder Kautschuklatex enthalten sein muß.

Der erfindungsgemäße Zweikomponenten-Reaktionskleber besteht aus zwei Komponenten A und B. Die Komponente A wird im allgemeinen als Binder und die Komponente B als Härter bezeichnet, jedoch ist diese Bezeichnung willkürlich. Die beiden Komponenten A und B werden getrennt produziert und abgefüllt und in Kombigebinden gelagert und ausgeliefert. Die beiden Komponenten werden vor Ort vom Verarbeiter homogen zusammengerührt. Der so hergestellte Kleber hat eine bestimmte rezepturabhängige Verarbeitungs- oder Topfzeit, die, wie im folgenden erläutert wird, variiert werden kann.

Nach dieser Zeit beginnt der Erhärtungsvorgang, der nicht mehr gestoppt werden kann.

Die Komponente A des erfindungsgemäßen Klebers enthält eine bei Raumtemperatur flüssige Fettsäure, die bitumenverträglich ist. Beispiele sind Ölsäure, Linolsäure, Linolensäure, Caprinsäure, Caprylsäure,

EP 0 346 673 B1

Arachidonsäure oder Pelargonsäure. Man kann auch flüssige Gemische solcher Fettsäuren verwenden, wobei das Gemisch auch eine bei Raumtemperatur nichtflüssige Fettsäure enthalten kann, sofern das Gemisch flüssig ist. Das oben beschriebene flüssige Fettsäuregemisch kann auch Harzsäuren enthalten. Es ist bevorzugt ein Gemisch aus Harzsäuren vom Typ der Abietinsäure, gesättigten und ungesättigten Fettsäuren sowie Fettsäureestern und geringen Anteilen an Sterinen, höheren Alkoholen und Kohlenwasserstoffen zu verwenden. Ein solches Gemisch ist als Tallöl im Handel. Erfindungsgemäß ist es besonders bevorzugt, als flüssige Fettsäure Tallöl zu verwenden.

Es ist jedoch auch möglich, Gemische wie oben beschrieben, synthetisch herzustellen. Außer Tallöl können auch alle anderen Fett- und Harzsäuregemische sowohl handelsüblicher Qualität als auch eigene Mischungen reiner Fettsäuren und Klebeharze eingesetzt werden, sofern die Mischungen bei Raumtemperatur flüssig sind. Als Harze können außer Tallharzsäuren auch handelsübliche Kolophoniumharze, IC-Harze, KW-Harze usw. eingesetzt werden. Es können alle Qualitäten von Tallöl, die im Handel sind und teilweise variablen Harzsäuregehalt aufweisen, verwendet werden. Man kann allerdings auch auf die Harzkomponente als klebrigmachenden Bestandteil verzichten. In einem solchen Fall ist es jedoch bevorzugt, daß der Zweikomponentenkleber Kautschuklatex enthält, oder daß das Bitumen kautschukmodifiziert ist.

Der Harzsäuregehalt der Tallölfraktion liegt zwischen 1 und 45 Gew.-%, bevorzugt zwischen 10 und 40 Gew.-%, besonders bevorzugt zwischen 15 und 30 Gew.-%.

Gemäß der ersten Ausführungsform des erfindungsgemäßen Klebers muß die Komponente A oder die Komponente B ein Erdalkalioxid oder Aluminiumoxid enthalten. Beispiele für Erdalkalioxide sind Magnesiumoxid, Bariumoxid und Calciumoxid. Es ist bevorzugt, daß die Komponente A oder die Komponente B Calciumoxid oder Aluminiumoxid enthält. Die Komponente A oder die Komponente B kann auch ein Gemisch aus verschiedenen Erdalkalioxiden und/oder Aluminiumoxid enthalten. Die Komponente, welche das Erdalkalioxid oder Aluminiumoxid oder ein Gemisch dieser Verbindungen enthält, darf kein Wasser und/oder Kautschuklatex enthalten. Wasser und/oder Kautschuklatex sind in der anderen Komponente enthalten. Im allgemeinen verwendet man einen Kautschuklatex, der 35 bis 65 Gew.-% Wasser enthält. Es reicht aus, daß das Wasser durch den Kautschuklatex zur Verfügung gestellt wird. Die Komponente, die Wasser und/oder Kautschuklatex enthält, kann somit entweder Wasser oder Kautschuklatex oder Wasser und Kautschuklatex enthalten.

Im einfachsten Fall kann somit die Komponente A aus einer bei Raumtemperatur flüssigen Fettsäure und mindestens einem Erdalkalioxid, Aluminiumoxid oder einem Gemisch dieser Verbindungen oder aus einer Fettsäure und Wasser bestehen. Es ist jedoch bevorzugt, daß die Komponente A ein Verschnittmittel enthält.

Die Komponente B kann im einfachsten Fall aus Erdalkalioxid oder Aluminiumoxid oder einem Gemisch dieser Verbindungen bestehen. Sie kann auch nur aus Wasser und/oder Kautschuklatex bestehen. Beispiele für Alkali- und Erdalkalihydroxide sind NaOH, KOH, LiOH, $Mg(OH)_2$, $Ca(OH)_2$, und $Ba(OH)_2$.

Die Komponente A oder die Komponente B oder beide Komponenten können mit Bitumen, Hartwachs oder einem mit bitumenverträglichen Polymeren oder einem Gemisch dieser Verbindungen verschnitten sein. Als Bitumen können alle handelsüblichen Bitumenqualitäten, wie destillierte Bitumina, geblasene Bitumina, Hartbitumina und Polymerbitumina verwendet werden. Polymerbitumina können vom Fachmann leicht hergestellt werden. Sie können auch im Handel bezogen werden. Beispiele für Polymerbitumina sind z.B. Caribit, Cariphalte, Ebano PMB, Styrelf, Olexobit, u.a.m..

Als Hartwachs können die im Handel erhältlichen Hartwachse verwendet werden. Ein Beispiel hierfür ist ein Polyamidhartwachs. Das Bitumen kann zusätzlich ein bitumenverträgliches Polymer oder ein Gemisch verschiedener Polymere enthalten. Es ist bevorzugt, sogenannte Blockcopolymere vom Typ Styrol-Butadien-Styrol bzw. Styrol-Isopren-Styrol und andere im Handel erhältliche Produkte zu verwenden. Die erfindungsgemäßen Gemische der Komponente A können mit bis zu 60 Gew.-% Bitumen, Hartwachs oder bitumenverträglichen Polymeren oder Gemische dieser Verbindungen verschnitten sein. Die Komponente B, das heißt, das Erdalkalioxid oder Aluminiumoxid oder das Wasser bzw. der Kautschuklatex können mit bis zu 90, vorzugsweise 30 bis 75 Gew.-%, Bitumen, Hartwachs oder bitumenverträglichen Polymeren oder Gemischen dieser Verbindungen bezogen auf die Komponente B (d.h. Komponente B = 100%) verschnitten sein.

Wird Tallöl verwendet, so kann die Tallölfranktion mit 5 bis 60 Gew.-%, bevorzugt mit 10 bis 40 Gew.-%, Bitumen, bezogen auf Gesamtgewicht des 2 K-Klebers, verschnitten sein. Das Bitumen kann, wie vorher ausgeführt wurde, mit Polymeren modifiziert worden sein.

Die flüssige Fettsäure bzw. die Tallölfraktion, eventuell verschnitten mit Bitumen oder mit Bitumen und/oder Polymeren, bildet erstaunlicherweise mit Erdalkalioxiden oder Aluminiumoxid lagerfähige Mischungen. Es bildet sich insbesondere mit Calciumoxid eine sehr stabile lagerfähige Mischung. Daher ist die Verwendung von Calciumoxid besonders bevorzugt.

Um ein Absetzen des Calciumoxids zu verhindern, können handelsübliche Absetzverhinderer, zum Beispiel Quelltone, hochdisperse Kieselsäure, Xantogum, Agar-Agar und andere sinnvoll eingesetzt werden. Zur Armierung können Fasern, insbesondere Mineralfasern, zugegeben werden.

4

Zur Steuerung der Topfzeit und des Reaktionsverlaufes können der Komponente A oder der Komponente B Topfzeitregulatoren zugesetzt werden. Die Topfzeit sollte bei Raumtemperatur mindestens 20 min., vorzugsweise 30 bis 60 min., betragen. Bei 40°C sollte sie mindestens 10 min. betragen. Die Topfzeit kann durch Säure, wie anorganische oder organische Säuren, beispielsweise Salzsäure oder Essigsäure, durch Halogenidionen, vorzugsweise durch Chloridionen, Amine, vorzugsweise Fettsäureamine, Fettsäurediamine und Fettsäurepolyamine reguliert werden. Es ist bevorzugt, Calciumchlorid zu verwenden. Das Mittel zur Regulierung der Topfzeit kann sowohl zu der Komponente A als auch zu der Komponente B zugegeben werden. Es wird zu der Komponente zugegeben, auf die es nicht reagiert. So wird beispielsweise, wenn Calciumchlorid oder ein Salz oder eine Säure verwendet wird, der Topfzeitregulator vorzugsweise zu der Wasser enthaltenden Komponente zugegeben. Der Topfzeitregulator wird in Mengen von 0 bis 5 Gew.-%, vorzugsweise 0,5 bis 2,5 Gew.-%, bezogen auf das Gesamtgewicht des 2 K-Klebers, verwendet.

Das Wasser wird vorteilhaft zur Steuerung von Klebekraft und Flexibilität teilweise oder ganz in Form handelsüblicher Kautschuklatices zugegeben.

In Abhängigkeit von der Zusammensetzung der Komponenten A und B können die Komponenten A und B beide flüssig sein oder die Komponente A kann flüssig und die Komponente B kann fest sein.

Im folgenden werden verschiedene Rezepturbeispiele für den erfindungsgemäßen Zweikomponentenkleber angegeben.

(a) Komponente A (Binder)

| Tallöl | 42% |
| Bitumen B 200 | 40% |
| Calciumoxid | 10% |
| Mineralfaser | 2,5% |

Komponente B (Härter)

| Calciumchlorid | 2% |
| Wasser | 1,5% |
| Kautschuklatex 58% | 2% |

(b) Komponente A (Binder)

| Tallöl | 34,7% |
| Bitumen 85/25 | 35,0% |
| APP-Kautschuk | 12,0% |
| Calciumoxid | 12,0% |

Komponente B (Härter)

| Kautschuklatex 58% | 4,5% |
| Calciumchlorid | 1,5% |
| Wasser | 0,3% |

(c) Komponente A (Binder)

| Tallöl | 51,8% |
| Kautschuklatex 58% | 6,6% |
| Wasser | 6,6% |
| Mineralfaser | 1,0% |

Komponente B (Härter)

| Calciumoxid | 11,1% |
| Hartwachs | 7,4% |
| Hartbitumen 90/100 | 15,5% |

(d) Komponente A (Binder)

Tallöl            42,14%
Wasser            14,29%
Bitumen B 200     6,6%
Mineralfaser      1,97%

Komponente B (Härter)

Calciumoxid          13,8%
Hartwachs            7,4%
Hartbitumen 90/100   13,8%

(e) Komponente A (Binder)

Tallöl                   35,0%
Calciumoxid              11,2%
Bitumen 85/25            35,0%
Polyisobutylenkautschuk  12%

Komponente B (Härter)

Kautschuklatex 58%            4,0%
Fettsäurediaminhydrochlorid  2,5%
Wasser                       0,3%

(f) Komponente A (Binder)

Tallöl                            33,3%

Polymerbitumen,
z.B. Cariphalte FR                38,9%

Faser (Cellulose,
Mineral oder synthetisch)         0,7%

Calciumoxid                       13,3%

Komponente B (Härter)

Calciumhydroxid    13,8%

(g) Komponente A (Binder)

Vorlauffettsäure aus der
Stearinsäureproduktion       35,8%

Kolophoniumharz Erw.
Pkt. 75° C                   16,0%

Faser                        1,0%

Komponente B (Härter)

Kautschuklatex    6,6%
Wasser            6,6%

6

Quellton            1,0%
Hartbitumen 90/100  15,5%
Hartwachs           6,4%
Calciumoxid         11,1%

(h) Komponente A (Binder)

| | |
|---|---|
| Fettsäuregemisch aus Destillation nativer Fette | 30,0% |
| Inden - Coumaron Harz Erw.Pkt. 85° C | 12,0% |
| Bitumen B 200 | 20,0% |
| Polymerbitumen z.B. Olexobit | 25,7% |
| Aluminiumoxid | 5,5% |
| Faser | 2,5% |

Komponente B (Härter)

Calciumchlorid  2,0%
Wasser          2,3%

(i) Komponente A (Binder)

| | |
|---|---|
| flüssiges Fettsäuregemisch aus synthetischer Fettsäuregewinnung | 28,0% |
| Kohlenwasserstoffharz Erw.Pkt. 85° C | 12,5% |
| Polymerbitumen z.B. Styrelf | 35,0% |
| Faser | 0,7% |
| Calciumoxid | 13,3% |

Komponente B (Härter)

Kaliumhydroxid  10,5%

Die Prozentgehalte sind als Gewichtsprozent angegeben.

Ein bevorzugter erfindungsgemäßer Kleber besteht aus einer Komponente A, welche Tallöl, Calciumoxid, Bitumen und Mineralfasern enthält und einer Komponente B, welche 58 %igen Latex und Calciumchlorid enthält. Die Zusammensetzung der Klebers ist wie folgt:

Komponente A

Tallöl          43 Gew.-%
CaO             22 Gew.-%
Bitumen B 200   28 Gew.-%
Mineralfasern   1 Gew.-%

Komponente B

Latex 58%ig    4,5 Gew.-%
$CaCl_2$       1,5 Gew.-%

Zusammensetzung eines bevorzugten erfindungsgemäßen Klebers:

Komponente A

| Fettsäure, vorzugsweise Tallöl | 25 bis 55 Gew.-% |
|---|---|
| (Polymer-)Bitumen | 15 bis 50 Gew.-% |
| Calciumoxid | 8 bis 30 Gew.-% |
| Mineralfaser | 0 bis 10 Gew.-% |
| Klebeharze | 0 bis 30 Gew.-% |

Komponente B

| Wasser | 0 bis 15 Gew.-% |
|---|---|
| Calciumchlorid | 0 bis 5 Gew.-% |
| Latex | 3 bis 10 Gew.-% |

Die folgenden Beispiele erläutern die Erfindung:

**Beispiel 1**

Komponente A

In einem handelsüblichen Rührer mit stehendem Mischwerkzeug werden 820 g Tallöl bei Raumtemperatur vorgelegt, und 50 g Mineralfasern werden bei stehendem Rührer eingestreut und einsumpfen gelassen. Dann wird der Rührer eingestellt, und 200 g Calciumoxid werden zudosiert. Dann werden 800 g heißflüssiges Bitumen unter Rühren zugegeben. Die Mischung wird homogen 30 min. bei 65°C gerührt, gekühlt und abgefüllt.

Komponente B

Zur Herstellung des Härters werden 110 g Calciumchlorid, 240 g Wasser und 200 g Kautschuklatex in ein handelsübliches Rührwerk gegeben und 90 min. gerührt, bis das Salz vollständig aufgelöst ist. Die homogene Lösung wird anschließend abgefüllt.

**Beispiel 2**

Komponente A

In einem Rührwerk wie im Beispiel 1 werden 777g Tallöl, 99g Kautschuklatex, 99g Wasser sowie 15g Fasern zusammengegeben und in 30 Minuten homogen gerührt. Die Mischung wird abgefüllt.

Komponente B

In einem Rührer wie in Beispiel 1 werden 232,50 g Hartbitumen bei 160° C Massetemperatur vorgelegt. Unter Rühren werden 111g Hartwachs in Pulverform zugegeben. Die Mischung wird unter Beibehaltung der Massetemperatur in 30 Minuten homogen gerührt.
In einem handelsüblichen Gerät zum Beschichten pulverförmiger Materialien mit flüssigen Materialien (z.B. Pflugscharmischer, Mischzyklon) werden 166,5 g Calciumoxid vorgelegt und auf 120° C erwärmt. Unter turbulenter Mischbewegung wird die heiße Bitumen/Wachsmischung zugegeben und 5 Minuten intensiv vermischt. Das fertige Pulver wird auf Raumtemperatur gekühlt und abgepackt.

**Beispiel 3**

Komponente A

Es wird verfahren wie in Beispiel 1. Es werden eingesetzt:

8

499,5 g Tallöl
583,5 g Polymerbitumen, z.B. Cariphalte FR,
10,5 g Mineralfaser
199,5 g Calciumoxid

<u>Komponente B</u>

207 g handelsübliches Calciumhydroxid werden abgewogen und verpackt.

**Beispiel 4**

<u>Komponente A</u>

In einem Rührwerk wie in Beispiel 1 werden 537 g Vorlauffettsäure vorgelegt und 15 g Mineralfasern zugegeben und einsumpfen lassen. Der Rührer wird angestellt und 20 Minuten laufen lassen. In dieser Zeit wird das Gemisch auf 45° C aufgeheizt. 240 g Kolophoniumharz werden aufgeschmolzen, auf 130° C temperiert und anschließend in das laufende Rührwerk gegeben. Das fertige Produkt wird 30 Muniten homogen gerührt, gekühlt und abgefüllt.

<u>Komponente B</u>

Aus, 166,5 g Calciumoxid, 96 g Hartwachs und 232,5 g Hartbitumen wird, wie in Beispiel 2 - Komponente B - beschrieben, ein Pulver hergestellt.

In einem Rührwerk wie in Beispiel 1 werden 99 g Kautschuklatex und 99 g Wasser vermischt. Bei stehendem Rührer werden 15 g Quellton eingestreut und unter heftiger Rührarbeit aufgequollen. Zu dieser Paste wird das Pulver aus Calciumoxid, Bitumen und Wachs zugegeben und in 30 Minuten homogen vermischt. Die Mischung wird abgefüllt.

Der Härter und der Binder werden aufbewahrt und vor dem Gebrauch miteinander vermischt.

**Patentansprüche**

1. Zweikomponenten-Reaktionskleber aus einer Komponente A und einer Komponente B, wobei die beiden Komponenten kurz vor Gebrauch vermischt werden, dadurch **gekennzeichnet, daß**

    (a) die Komponente A mindestens eine bei Raumtemperatur flüssige Fettsäure, und mindestens ein Erdalkalioxid oder Aluminiumoxid oder ein Gemisch dieser Verbindungen oder Wasser und/oder Kautschuklatex enthält,

    (b) die Komponente B mindestens ein Erdalkalioxid oder Aluminiumoxid oder ein Gemisch dieser Verbindungen oder Wasser und/oder Kautschuklatex enthält,

    wobei entweder in der Komponente A oder in der Komponente B mindestens ein Erdalkalioxid oder Aluminiumoxid oder ein Gemisch dieser Verbindungen, und in der anderen Komponente Wasser und/oder Kautschuklatex enthalten sein muß und

    (c) die Komponente A oder die Komponente B oder beide Komponenten mit Bitumen, Hartwachs oder einem bitumenverträglichen Polymeren oder einem Gemisch dieser Verbindungen verschnitten sind, wobei der Gehalt an Bitumen, Hartwachs oder bitumenverträglichen Polymeren oder Gemischen dieser Verbindungen in Komponente A bis zu 60 Gew.-% und in Komponente B bis zu 90 Gew.-% beträgt.

2. Zweikomponenten-Reaktionskleber aus einer Komponente A und einer Komponente B, wobei die beiden Komponenten kurz vor Gebrauch vermischt werden, dadurch **gekennzeichnet, daß**

    (a) die Komponente A mindestens eine bei Raumtemperatur flüssige Fettsäure enthält, und

    (b) die Komponente B mindestens ein Alkalihydroxyd, Erdalkalihydroxyd oder Aluminiumhydroxyd und gegebenenfalls Wasser und/oder Kautschuklatex enthält, und

    (c) die Komponente A oder die Komponente B oder beide Komponenten mit Bitumen, Hartwachs oder einem bitumenverträglichen Polymeren, oder einem Gemisch dieser Verbindungen verschnitten sind, wobei der Gehalt an Bitumen, Hartwachs oder bitumenverträglichen Polymeren oder Gemischen dieser Verbindungen in Komponente A bis zu 60 Gew.-% und in Komponente B bis zu 90 Gew.-% beträgt.

3. Zweikomponenten-Reaktionskleber nach Anspruch 2, dadurch **gekennzeichnet**, daß die Komponente A zusätzlich mindestens ein Erdalkalioxid oder Aluminiumoxid oder ein Gemisch dieser Verbindungen enthält.

**4.** Zweikomponenten-Reaktionskleber nach Anspruch 1 oder 2 dadurch **gekennzeichnet**, daß die Komponente A zusätzlich zu der Fettsäure mindestens ein Klebeharz enthält.

**5.** Zweikomponenten-Reaktionskleber nach mindestens einem der Ansprüche 1 bis 4, dadurch **gekennzeichnet,** daß die Komponente A als flüssige Fettsäure Tallöl enthält.

**6.** Zweikomponenten-Reaktionskleber nach mindestens einem der Ansprüche 1 bis 5, dadurch **gekennzeichnet**, daß die Komponente A oder die Komponente B einen Topfzeitregulator enthält.

**7.** Zweikomponenten-Reaktionskleber nach mindestens einem der Ansprüche 1 bis 6, dadurch **gekennzeichnet**, daß die Komponente A und/oder die Komponente B Fasern enthält.

**8.** Zweikomponenten-Reaktionskleber nach mindestens einem der Ansprüche 1 bis 7, dadurch **gekennzeichnet,** daß die Komponente A und die Komponente B flüssig sind.

**9.** Zweikomponenten-Reaktionskleber nach mindestens einem der Ansprüche 1 bis 7, dadurch **gekennzeichnet**, daß die Komponente A flüssig und die Komponente B fest sind.

**10.** Zweikomponenten-Reaktionskleber nach mindestens einem der Ansprüche 1 bis 9, dadurch **gekennzeichnet, daß**
(a) die Komponente A Tallöl, Calciumoxid, Bitumen und Mineralfasern, und
(b) die Komponente B 45 bis 70 %-igen wäßrigen Latex und Calciumchlorid enthält.

**11.** Zweikomponenten-Reaktionskleber nach mindestens einem der Ansprüche 1 bis 10, dadurch **gekennzeichnet,** daß die Komponente A oder die Komponente B oder beide Komponenten übliche Zusatzstoffe enthalten.

**12.** Verfahren zum Verkleben von Bitumenbahnen unter Herstellung einer wasserundurchlässigen Fläche aus Bitumenbahnen, dadurch **gekennzeichnet**, daß man die Komponenten A und B des Zweikomponentenklebers nach einem der Ansprüche 1 bis 10 vermischt, das Gemisch auf die Bitumenbahnen in an sich bekannter Weise aufbringt und die Bitumenbahnen miteinander verklebt.

## Claims

**1.** A two-pack adhesive of a component A and a component B, the two components being mixed just before use, characterized in that
(a) component A contains at least one fatty acid liquid at room temperature and at least one alkali earth metal oxide or aluminium oxide or a mixture of these compounds or water and/or rubber latex,
(b) component B contains at least one alkaline earth metal oxide or aluminium oxide or a mixture of these compounds or water and/or rubber latex,
at least one alkaline earth metal oxide or aluminium oxide or a mixture of these compounds having to be present either in component A or in component B and water and/or rubber latex having to be present in the other component, and
(c) component A or component B or both components is/are blended with bitumen, hard wax or a bitumen-compatible polymer or with a mixture of these compounds, the content of bitumen, hard wax or a bitumen-compatible polymer or a mixture of these compounds in component A being up to 60% by weight and, in component B, up to 90% by weight.

**2.** A two-pack adhesive of a component A and a component B, the two components being mixed just before use, characterized in that
(a) component A contains at least one fatty acid liquid at room temperature and
(b) component B contains at least one alkali metal hydroxide, alkaline earth metal hydroxide or aluminium hydroxide and, optionally, water and/or rubber latex and
(c) component A or component B or both components is/are blended with bitumen, hard wax or a bitumen-compatible polymer or with a mixture of these compounds, the content of bitumen, hard wax or a bitumen-compatible polymer or a mixture of these compounds in component A being up to 60% by weight and, in component B, up to 90% by weight.

3. A two-pack adhesive as claimed in claim 2, characterized in that component A additionally contains at least one alkaline earth metal oxide or aluminium oxide or a mixture of these compounds.

4. A two-pack adhesive as claimed in claim 1 or 2, characterized in that component A contains at least one adhesive resin in addition to the fatty acid.

5. A two-pack adhesive as claimed in at least one of claims 1 to 4, characterized in that component A contains tall oil as the liquid fatty acid.

6. A two-pack adhesive as claimed in at least one of claims 1 to 5, characterized in that component A or component B contains a pot-life regulator.

7. A two-pack adhesive as claimed in at least one of claims 1 to 6, characterized in that component A and/or component B contains fibres.

8. A two-pack adhesive as claimed in at least one of claims 1 to 7, characterized in that component A and component B are liquid.

9. A two-pack adhesive as claimed in at least one of claims 1 to 7, characterized in that component A is liquid and component B is solid.

10. A two-pack adhesive as claimed in at least one of claims 1 to 9, characterized in that
(a) component A contains tall oil, calcium oxide, bitumen and mineral fibres and
(b) component B contains 45 to 70% aqueous latex and calcium chloride.

11. A two-pack adhesive as claimed in at least one of claims 1 to 10, characterized in that component A or component B or both components contain typical additives.

12. A process for bonding bitumen webs to form a waterproof surface of bitumen webs, characterized in that components A and B of the two-pack adhesive claimed in any of claims 1 to 10 are mixed, the mixture is applied to the bitumen webs in known manner and the bitumen webs are bonded to one another.

## Revendications

1. Colle réactive à deux composants, formée d'un composant A et d'un composant B, les deux composants étant mélangés ensemble juste avant l'utilisation, caractérisée en ce que
(a) le composant A contient au moins un acide gras liquide à la température ambiante et au moins un oxyde alcalino-terreux ou de l'oxyde d'aluminium ou un mélange de ces composés ou de l'eau et/ou du latex à caoutchouc,
(b) le composant B contient au moins un oxyde alcalino-terreux ou de l'oxyde d'aluminium ou un mélange de ces composés et/ou du latex à caoutchouc,
au moins un oxyde alcalino-terreux ou de l'oxyde d'aluminium ou un mélange de ces composés devant être contenu dans le composant A ou dans le composant B, et de l'eau et/ou du latex à caoutchouc devant être contenu(s) dans l'autre composant, et
(c) le composant A ou le composant B ou les deux composants sont dilués avec du bitume, de la cire durcie ou un polymère compatible avec le bitume ou un mélange de ces composés,
la teneur en bitume, en cire durcie ou en polymère compatible avec le bitume ou en mélanges de ces composés valant jusqu'à 60 % en poids dans le composant A et jusqu'à 90 % en poids dans le composant B.

2. Colle réactive à deux composants, formée d'un composant A et d'un composant B, les deux composants étant mélangés ensemble juste avant l'utilisation,'caractérisée en ce que
(a) le composant A contient au moins un acide gras liquide à la température ambiante, et
(b) le composant B contient au moins un hydroxyde alcalin, un hydroxyde alcalino-terreux ou de l'hydroxyde d'aluminium et éventuellement de l'eau et/ou du latex à caoutchouc, et

(c) le composant A ou le composant B ou les deux composants sont dilués avec du bitume, de la cire durcie ou un polymère compatible avec le bitume ou un mélange de ces composés,
la teneur en bitume, en cire durcie ou en polymère compatible avec le bitume ou en mélanges de ces composés valant jusqu'à 60 % en poids dans le composant A et jusqu'à 90 % en poids dans le composant B.

3. Colle réactive à deux composants selon la revendication 2, caractérisée en ce que le composant A contient en outre au moins un oxyde alcalino-terreux ou de l'oxyde d'aluminium ou un mélange de ces composés.

4. Colle réactive à deux composants selon la revendication 1 ou 2, caractérisée en ce que le composant A contient au moins une résine collante en plus de l'acide gras.

5. Colle réactive à deux composants selon au moins une des revendications 1 à 4, caractérisée en ce que le composant A contient du tallol comme acide gras liquide.

6. Colle réactive à deux composants selon au moins une des revendications 1 à 5, caractérisée en ce que le composant A ou le composant B contient un régulateur du temps d'utilisation.

7. Colle réactive à deux composants selon au moins une des revendications 1 à 6, caractérisée en ce que le composant A et/ou le composant B contient des fibres.

8. Colle réactive à deux composants selon au moins une des revendications 1 à 7, caractérisée en ce que le composant A et le composant B sont liquides.

9. Colle réactive à deux composants selon au moins une des revendications 1 à 7, caractérisée en ce que le composant A est liquide et le composant B est solide.

10. Colle réactive à deux composants selon au moins une des revendications 1 à 9, caractérisée en ce que
(a) le composant A contient du tallol, de l'oxyde de calcium, du bitume et des fibres minérales, et
(b) le composant B contient du latex contenant 45 à 70 % d'eau, et du chlorure de calcium.

11. Colle réactive à deux composants selon au moins une des revendications 1 à 10, caractérisée en ce que le composant A ou le composant B ou les deux composants contiennent des additifs usuels.

12. Procédé de collage de panneaux bitumineux avec formation d'une surface imperméable à l'eau, formée de panneaux bitumineux, caractérisé en ce qu'on mélange les composants A et B de la colle à deux composants selon une des revendications 1 à 10, on applique le mélange sur les panneaux bitumineux de manière connue en soi et on colle les panneaux bitumineux entre eux.